# EUROPÄISCHE PATENTSCHRIFT

(11) **EP 0 487 913 B1**
(45) Veröffentlichungstag und Bekanntmachung des Hinweises auf die Patenterteilung: **17.04.1996**
(21) Anmeldenummer: 91118420.8
(22) Anmeldetag: 29.10.1991
(51) Int. Cl.: B01J 20/04, B01D 53/34, C04B 2/06

(54) **Hochreaktive Reagentien und Zusammensetzungen für die Abgas- und Abwasserreinigung, ihre Herstellung und ihre Verwendung**
Highly reactive reagents and compositions for the purification of waste gas and waste water, their preparation and their use
Réactifs et compositions ayant une réactivité haute pour l'épuration de gaz d'échappement et d'eau usée, leur préparation et leur utilisation

(30) Priorität: 29.10.1990 DE 4034417
(43) Veröffentlichungstag der Anmeldung: 03.06.1992
(73) Patentinhaber: Walhalla-Kalk Entwicklungs- und Vertriebsgesellschaft mbH, D-93055 Regensburg (DE)
(72) Erfinder: Schuster, Georg, Dipl.-Ing., W-8409 Tegernheim (DE)
(74) Vertreter: Patentanwälte Beetz - Timpe - Siegfried Schmitt-Fumian - Mayr

(56) Entgegenhaltungen:
- WO-A-89/11329
- DE-A- 2 722 423
- DE-A- 2 924 585
- DE-A- 3 716 566
- DE-A- 3 717 848
- DE-A- 3 735 245
- DE-A- 3 844 217
- DE-A- 3 915 934
- "Tonminerale und Tone", Steinkopf Verlag, Darmstadt, 1993, Seiten 224 und 225, (K. Jasmund und G. lagaly)

## Beschreibung

Die Erfindung betrifft hochreaktive Reagentien und Zusammensetzungen für die Reinigung von Abgasen und Rauchgasen, insbesondere aus Verbrennungsprozessen, sowie zur Abwasserreinigung, ihre Herstellung sowie ihre Verwendung.

Die Reagentien und Zusammensetzungen stellen Gemische von Kalkhydrat bzw. Calciumhydroxid mit einem oder mehreren Zusatzstoffen dar und zeichnen sich durch besonders große spezifische Oberfläche und gegebenenfalls auch durch besonders kleine Partikelgröße aus.

Es sind bereits Kalkhydrate mit hoher spezifischer Oberfläche von bis zu 40 m²/g bekannt, die gegenüber handelsüblichen Kalkhydraten bei der Abgasreinigung höhere Abscheideleistungen ergeben. Diese Kalkhydrate werden durch Löschen mit Hilfe von Alkohol hergestellt. Sie haben den großen Nachteil, daß die Herstellung äußerst aufwendig ist und trotz Rückgewinnung des Alkohols ein Restgehalt an Alkohol in Mengen von mehreren Prozenten im Produkt verbleibt.

Aus der Literatur und DE 37 16 566 sind Kalkhydrate für die Abgasreinigung bekannt, die basische, oxidierende, reduzierende, hydratbildende oder adsorptive oder schwermetallbindende Eigenschaften haben. Diese Zuschläge dienen ausschließlich zur Erzielung einer hohen Reaktivität, z.B. zum Einsatz in Rauchgasentschwefelungsanlagen (REA),ohne daß Auswirkungen der Zusatzstoffe auf die nach der Verwendung vorliegenden sogenannten REA-Rückstände berücksichtigt sind, so daß aufgrund der Auslaugbarkeit bestimmter Zusätze keine Deponiesicherheit gegeben ist. Vor allen Dingen wird bei diesen bekannten Gemischen die ursprüngliche Oberfläche des Gemisches bzw. der Komponenten nicht durch zusätzliche Verfahrensmaßnahmen bei der Herstellung verändert.

Aus DE 38 26 971 und DE 39 15 934 sind Kalkprodukte zur Reinigung von Gasen und Abgasen bekannt, bei deren Herstellung Kalken bzw. dem Löschwasser zum Kalklöschen grenzflächenaktive Stoffe, wie Aktivkohle und Braunkohlen- oder Herdofenkoks, aktiviertes Aluminiumoxid bzw. Kieselgel, zugemischt und zusätzlich katalytisch wirksame Schwermetalle, z.B. Vanadium, und schwermetallbindende Stoffe, wie Natriumsulfid, zugesetzt werden. Auch bei diesen vorbekannten Produkten liegt aufgrund der kompakten Matrixstruktur eine nur geringe spezifische Oberfläche vor. Diese Produkte werfen ferner Probleme bei der Endlagerung in Reststoffdeponien auf, da, abgesehen von der generellen Auslaugbarkeit, sogar katalytisch wirksame Schwermetalle und Schwermetalloxide zugesetzt werden, die ausgelaugt werden können, was bei Deponieprodukten besonders unerwünscht ist.

So wurde z.B. festgestellt, daß bei alleinigem Zusatz von Aktivkohle zu Kalkhydrat z.B. die Quecksilberbindung zwar verbessert wird, in den Eluaten der Rückstände aber wieder erhebliche Quecksilberkonzentrationen zu finden sind.

Der Zusatz von Aktivkohle hat weiterhin den großen Nachteil, daß selbst bei Zugabemengen von nur 2 bis 5 % der Gesamtmasse der Kohlenstoffanteil bereits hoch genug ist, daß, insbesondere bei ungleichmäßiger Verteilung oder Bildung von Nestern, Entzündungen auftreten können, was bereits in mehreren bekanntgewordenen Fällen zu Glimmbränden in Reststoffsilos geführt hat.

Aus der Literatur sind ferner Verfahren zur Reinigung von Abgasen bekannt, bei denen ein der Hauptreinigungsstufe nachgeschalteter Aktivkohlereaktor verwendet wird. Auch bei diesem herkömmlichen System besteht die Gefahr von Bränden. Um dieses Problem zu vermeiden, müßte die Temperatur der Rauchgase entsprechend abgesenkt werden, was wiederum mit einem zusätzlichen Energieverbrauch für die Wiederaufheizung vor dem Kamin verbunden wäre.

Der Erfindung liegt die Aufgabe zugrunde, hochreaktive Reagentien und Zusammensetzungen zur Reinigung von Gasen und insbesondere industriellen Abgasen und Rauchgasen, besonders aus Verbrennungsprozessen, sowie von Abwässern, die gleiche oder ähnliche Schadstoffe wie Abgase enthalten, auf der Basis insbesondere trockener, pulverförmiger Gemische von Calciumhydroxid mit Zusatzstoffen, die sich durch hohe Reinigungsleistung und Deponiesicherheit der Reaktionsprodukte auszeichnen, sowie verfahren zu ihrer Herstellung und ihre Verwendung anzugeben.

Die Aufgabe wird gemäß den unabhängigen Ansprüchen gelöst. Die abhängigen Ansprüche betreffen vorteilhafte Ausführungsformen der Erfindungskonzeption.

Die erfindungsgemäßen hochreaktiven Reagentien zur Reinigung von Abgasen und Rauchgasen, insbesondere aus Verbrennungsprozessen, sowie von Abwässern mit gleichen oder ähnlichen Schadstoffen wie in Abgasen stellen Gemische von Calciumhydroxid mit Zusatzstoffen dar; sie sind gekennzeichnet durch
ein Gemisch
(a) von trockenem gelöschtem Kalk mit porösem gemahlenem Ton als Zusatzstoff
   oder
(b) von trockenem porosiertem gelöschtem Kalk mit gemahlenem Ton als Zusatzstoff,
wobei der Gehalt an gelöschtem Kalk etwa 60 bis 99 Masse-% beträgt.

Die erfindungsgemäßen Reagentien und Zusammensetzungen sind nach verschiedenen verfahren erhältlich, die ebenfalls Gegenstand der vorliegenden Erfindung sind. Die Produkte zeichnen sich generell durch Porosität und eine entsprechend hohe spezifische Oberfläche aus.

Das erfindungsgemäße Verfahren zur Herstellung der hochreaktiven Reagentien bzw. Zusammensetzungen ist gekennzeichnet durch

### Mischen

(a) von trockenem gelöschtem Kalk mit porösem gemahlenem Ton als Zusatzstoff
   oder
(b) von trockenem porosiertem gelöschtem Kalk mit gemahlenem Ton als Zusatzstoff,
in solchen Mengen, daß das resultierende Produkt etwa 60 bis 99 Masse-% gelöschten Kalk enthält.

Im Rahmen der Erfindungskonzeption kann die Kalkkomponente porosiert sein und besitzt dann eine wesentlich vergrößerte spezifische Oberfläche. Die Herstellung des porosierten gelöschten Kalks geschieht durch Porosierung mit einem Porosierungsmittel, insbesondere durch Einblasen von Luft oder anderen im wesentlichen inerten Gasen oder Gasgemischen, die auch in situ durch chemische Reaktionen aus Metallen, anorganischen oder organischen Metallverbindungen oder anderen anorganischen oder organischen Verbindungen erzeugt werden können, während des Löschvorgangs.

Als Porosierungsmittel eignen sich, neben Gasen und Gasgemischen, die als solche in die betreffenden Suspensionen eingeleitet werden, insbesondere Metalle, wie Aluminium und Zink, ferner anorganische und organische Hydride, die im Kontakt mit Wasser bzw. alkalischen Lösungen Wasserstoff entwickeln, Wasserstoffperoxid oder andere Peroxide und andere Verbindungen, die Sauerstoff freisetzen, z.B. Chlorkalk ferner auch Carbide, wie Calciumcarbid, sowie etwa Porenbildungsmittel, wie sie auf dem Gebiet der Zementverarbeitung bekannt und handelsüblich sind.

Erforderlichenfalls können Dispergiermittel oder andere grenzflächenaktive Mittel zugesetzt werden.

Das Porosierungsmittel kann, sofern es nicht gasförmig ist, z.B. Aluminiumpulver oder Zinkpulver, zusammen mit dem ungelöschten Kalk vorgelegt oder alternativ dazu auch dem verwendeten Löschwasser zugegeben werden.

Da beim Löschen des Kalks eine Phasenneubildung erfolgt, werden besonders starke Porosierungseffekte erzielt.

Wenn andererseits von bereits gelöschtem Kalk ausgegangen wird, erfolgt die Porosierung in einer wäßrigen Suspension oder Paste. Hierbei kann das Porosierungsmittel, sofern es nicht gasförmig ist, zusammen mit dem gelöschtem Kalk und ggfs. Zusatzstoffen oder in der zur Suspensionsherstellung verwendeten Wasserphase vorgelegt oder auch separat in die Suspensionen eingemischt werden. Das Vorliegen eines Porosierungsmittels führt auch bei Suspensionen, die bereits gelöschten Kalk enthalten, zu einem Porosierungseffekt. Durch den möglichen Zusatz von ungelöschtem Kalk erfolgt bei der Suspensionsherstellung zugleich Phasenneubildung durch den eintretenden Löschvorgang, wodurch die Porosierung verstärkt wird.

Die auf dem Löschen von Kalk beruhenden Verfahren können durch geeignete Wahl der Wassermenge so geführt werden, daß ein trockenes, pulverförmiges Produkt anfällt.

Beispiele für weitere poröse bzw. porosierte Zusatzstoffe sind etwa Blähtone, geblähte Silicate und Gasbetonmehl.

Durch Porosierung während des Löschvorgangs konnten im Rahmen der Erfindung Kalkhydrate bzw. Gemische mit spezifischen Oberflächen von bis zu etwa 100 m²/g und insbesondere von etwa 25 bis etwa 40 m²/g erzielt werden, während bei ungeschäumten Kalkhydraten lediglich spezifische Oberflächen im Bereich von etwa 16 bis 18 m²/g erreicht werden. Geschäumte Gemische aus Weißfeinkalk mit 10 Masse-% Tonmehl wiesen spezifische Oberflächen im Bereich von 30 bis 60 m²/g auf, in Abhängigkeit von der Verfahrensführung und der eingesetzten Menge an Porosierungsmittel, beispielsweise Aluminiumpulver. Geschäumte Gemische aus Weißfeinkalk mit 10 Masse-% Tonmehl und 10 Masse-% Aktivkohle ergaben spezifische Oberflächen im Bereich von 45 bis 84 m²/g.

Die spezifische Oberfläche kann ferner für spezielle Einsatzzwecke durch Aufmahlen weiter erhöht werden.

Dabei ist es erfindungsgemäß nicht erforderlich, die geschäumten Gemische, etwa wie im Fall von DE 37 17 848, einer Dampfhärtung im Autoklaven zu unterziehen und die gehärteten Produkte nachträglich wieder zu brechen bzw. zu mahlen, so daß neben der erheblichen Verfahrensvereinfachung bei der Herstellung auch eine gegenüber diesem Stand der Technik deutliche Energieeinsparung erzielt wird. Außerdem wird durch eine Autoklavenhärtung die Reaktionsfähigkeit vermindert.

Als weitere Zusatzstoffe neben dem gemahlenen Ton, die dem Basismaterial, das insbesondere Kalkhydrat bzw. Weißfeinkalk darstellt, oder dem zum Löschen des ungelöschten Kalks verwendeten Wasser zugesetzt werden, können zahlreiche Zusatzstoffe Verwendung finden, insbesondere Tonmehle, gebrannte Tone, Gasbetonstaub, Blähton, aufgemahlener Bruch aus der Kalksandsteinherstellung oder der Yalisteinherstellung, Traßmehle, Traßkalke, Bleicherden, Zemente, Calciumaluminate, Natriumaluminate, Calciumsulfid, organische Sulfide, Calciumsulfit, kohlenstoffhaltige Sorptionsmittel, wie inbesondere Herdofenkokse, Braunkohlenstaub, Aktivkohle und aufgemahlene oder auch unbehandelte Flugaschen aus der Steinkohlefeuerung, ferner Wasserglas sowie Beschleuniger und/oder Verzögerer der hydraulischen Erhärtung, wie sie beispielsweise in der Zementindustrie eingesetzt werden und handelsüblich sind (z.B. Porenbildner wie Addiment LP1 und LP2, Schaumbildner 1TM bis 4TM, Abbindeverzögerer VZ).

Durch geeignete Auswahl von adsorptiv und absorptiv wirksamen Komponenten werden Produkte erhalten, die sich nach der Verwendung besonders leicht verfestigen lassen. Erfindungsgemäß werden dementsprechend vorzugsweise Komponenten bereits für die Gasreinigung eingesetzt, die nach dem Stand der Technik bisher nachträglich den Rückständen aus der Abgasreinigung beigemischt wurden, um deren Deponiefähigkeit zu verbessern.

Wesentlich für die Erhärtbarkeit solcher Rückstände sind insbesondere Zementphasen, wie C₂(A,F) (2CaOxAl₂O₃, Fe₂O₃) CA (CaOxAl₂O₃), C₂S (2CaOxSiO₂), C₃S (3CaOxSiO₂) und C₃A (3CaOxAl₂O₃), sowie die CSH-Phasen aus Gasbeton und Kalksandstein bzw. aus der Reaktion der eingesetzten Komponenten bzw. Gemische.

Reaktive Zusatzstoffe, wie Calcium- und Natriumaluminat, besitzen neben der verfestigenden Wirkung auch hohe Wirksamkeit bei der Bindung von Sulfat, Fluorid und Chlorid, die z.B. in Form von Ettringit, Fluorettringit oder sogenanntem Friedel'schem Salz gebunden werden.

Damit wird die Sicherheit auf Reststoffdeponien erhöht bzw. eine geringere Auslaugbarkeit der Reststoffe erzielt.

Zugleich ist auch die physikalische Belastbarkeit derartiger verfestigter Rückstände wesentlich günstiger als bei herkömmlichen Gasreinigungsmaterialien.

Die erfindungsgemäßen Produkte können ferner vorteilhaft auch Calciumsulfit bzw. calciumsulfithaltige REA-Produkte enthalten, die ein hohes Wasserbindevermögen aufweisen. Diese Verbindungen disproportionieren bei höheren Temperaturen, wie sie z.B. in Abgasreinigungsreaktoren herrschen, zu Sulfid und Sulfat, was besonders für die Schwermetallabtrennung bzw. Schwermetallfällung günstig ist.

Die Mengen der Zusatzstoffe werden so gewählt, daß das resultierende Produkt etwa 60 bis 99 Masse-% Calciumhydroxid, bezogen auf die Trockenmasse, enthält, bzw. so, daß das resultierende Produkt etwa 1 bis 40 Masse-% und vorzugsweise etwa 1 bis 15 Masse-% Zusatzstoffe, bezogen auf die Trockenmasse, enthält. Der normale Gehalt hochwertiger Kalkhydrate an Verunreinigungen beträgt bis zu 5 Masse-%.

Besonders vorteilhafte erfindungsgemäße Reagentien bzw. Zusammensetzungen enthalten etwa 80 bis 90 Masse-% Kalkhydrat bzw. Calciumhydroxid sowie etwa 2 bis 20 Masse-% Ton und etwa 0,2 bis 3 Masse-% Aktivkohle und/oder 0,1 bis 1 Masse-% Calciumsulfid, bezogen auf die Trockenmasse. Sie können ferner vorteilhaft auch Gasbetonmehl enthalten, günstigerweise etwa 10 bis 20 Masse-%. Die Gesamtmasse der genannten Bestandteile beträgt jeweils 100 Masse-%.

Die Trocknung von gelöschtem Kalk kann im Rahmen der Erfindung durch Energiezufuhr beliebiger Art oder vorteilhaft durch Umsetzung mit einer entsprechenden Menge ungelöschtem Kalks vorgenommen werden.

Die erfindungsgemäßen Reagentien und Zusammensetzungen können als solche wie auch im Gemisch mit trockenen Kalkprodukten oder mit sog. gebrauchsfertiger Kalkmilch zur Gasreinigung eingesetzt werden. Sie eignen sich sowohl für die trockene als auch für die quasi-trockene und die nasse Gasreinigung. Sie können in den Reaktoren zur Abgasreinigung und/oder, vorteilhaft in Form von Precoatschichten, auf nachgeschalteten Filtern eingesetzt werden.

Bei mehrstufigen Abgasreinigungsanlagen können die erfindungsgemäßen Reagentien und Zusammensetzungen in zwei oder mehr Stufen eingesetzt werden. Der Einsatz im Gemisch mit Natriumhydroxid, Natriumcarbonat oder Natriumhydrogensulfit ist insbesondere bei naß arbeitenden Rauchgasentschwefelungsanlagen möglich.

Vorteilhaft ist auch ein Einblasen der erfindungsgemäßen Produkte in Elektrofilter oder in den Gasstrom vor Nachschaltheizflächen, wobei in diesem Fall Gemische mit Zusätzen von leicht abrasiven Stoffen wie CaCO₃ oder Gasbetonmehle günstig sind. Vorteilhaft ist ferner auch ein Einblasen mit H₂O unmittelbar vor oder nach dieser Konditionierung oder in den Rauchgaskanal unmittelbar vor oder nach einem der Abgasreinigungsreaktoren, z.B. einem Elektrofilter, bei etwa 300 °C mit Reagentien zur Abscheidung oder zum Abbau organischer Schadstoffe, z.B. zur Zerstörung von Dioxinen etc. in den Rückständen, z.B. Gemischen aus Flugasche und REA-Produkten, durch Temperatureinwirkung, beispielsweise in einer Hagenmaiertrommel; die restlichen Schadstoffe können günstig z.B. in einem Polizeifilter abgeschieden werden.

Durch die gegenüber herkömmlichen Gasreinigungsmaterialien auf Kalkbasis wesentlich höhere spezifische Oberfläche und damit höhere reaktive Oberfläche kann die Abscheideleistung insbesondere bei leicht flüchtigen Schwermetallen, wie Quecksilber, Arsen, Seien und dergleichen, sowie besonders bei Kohlenwasserstoffen und halogenierten, besonders chlorierten Kohlenwasserstoffen, Dioxinen und Furanen wesentlich erhöht werden.

Vorteilhaft werden rein anorganische Reagentien bzw. Zusammensetzungen im Temperaturbereich von 0 bis 1500 °C, kohlenstoffhaltige Produkte im Temperaturbereich von 0 bis 350 °C eingesetzt.

Die einzelnen Komponenten bzw. Zusammensetzungen können ferner in nichtporosierter wie auch in porosierter Form ebenfalls direkt in den Abgasstrom bzw. in Reaktoren eingebracht werden, und zwar auch an anderer Stelle als die erfindungsgemäßen Reagentien bzw. Zusammensetzungen.

Die erfindungsgemäßen Reagentien bzw. Zusammensetzungen können prinzipiell in beliebigen Reaktoren eingesetzt werden, wobei sie vorteilhaft beispielsweise in Flugstromreaktoren oder in Wirbelschichtreaktoren als Pulver und in gekörnter oder kompaktierter Form beispielsweise in Wanderbett-, Festbett- oder Schüttschichtreaktoren sowie ebenfalls in Wirbelschichtreaktoren eingesetzt werden.

Die Reagentien bzw. Zusammensetzungen gemäß der Erfindung können ferner auch in gleicher Weise zur Behandlung von Abwässern eingesetzt werden, die gleiche oder ähnliche Schadstoffe enthalten wie Abgase.

Der Einsatz kann dabei nach üblichen Verfahren erfolgen, nach denen die Produkte mit Abwässern in Kontakt gebracht werden.

Die Erfindung wird im folgenden durch Beispiele näher erläutert.

Für alle Versuche der nachfolgenden Beispiele wurde bei gleicher prinzipieller Versuchsdurchführung dieselbe Versuchsapparatur eingesetzt. Die Apparatur bestand aus zwei beheizbaren Kammern von 50,3 bzw. 102 Litern Fassungsvermögen. In der kleinen Kammer wurde jeweils bei Normaltemperatur ein synthetisches Abgas angesetzt. Anschließend wurden beide Kammern auf die gewünschte Temperatur von 150 bis 200 °C aufgeheizt. Das synthetische Abgas aus der kleinen Kammer wurde durch das jeweilige Absorbens gesaugt. Der Druckausgleich erfolgte durch heißes Gas aus der umgebenden größeren Kammer bzw. bei dieser wiederum durch Raumluft. Die Absaugrohre zum Gefäß mit dem Absorbens waren ebenfalls beheizt bzw. befanden sich im größeren Gefäß. Da mit Leitungen von lediglich 0,5 cm Innendurchmesser gearbeitet wurde, war am Absorbens die gewünschte Reaktionstemperatur relativ gut einzuhalten.

Alle Prozentangaben sind massebezogen.

### Beispiel 1

Als Reagens wurde ein Gemisch aus Branntkalk (CaO) mit 15 % Tonmehl und 0,5 % Aluminiumpulver (bezogen auf die Gesamtmasse) eingesetzt, das geschäumt und mit Wasser bis zum Erhalt eines trockenen Pulvers gelöscht war. Es entstand ein Reagens mit einer spezifischen Oberfläche (BET) von 33,2 m²/g. Durch 0,5 g dieses Materials wurden bei 170 ± 5 °C 50,3 l eines synthetischen Abgases mit 0,4 g/l H₂O, 19,8 mg/l HCl und 3 µg/l HgCl₂ geleitet.

Von den insgesamt 150,9 µg HgCl₂ wurden 82,3 % an dem Gemisch adsorbiert. Das zeigt, daß diese Gemische von Ton und Kalkhydrat gasförmige Quecksilberverbindungen adsorbieren können.

### Beispiel 2

Ein mit 0,5 % Aluminiumpulver, bezogen auf die Gesamtmasse, geschäumtes und gelöschtes Gemisch aus 85 % Branntkalk, 13 % Tonmehl und 2 % Aktivkohle wurde als Reagens eingesetzt. Das Reagens besaß eine spezifische Oberfläche (BET) von 62,4 m²/g. Dieses Reagens wurde bei 200 ± 5 °C mit einem Gasgemisch aus 150 µg HgCl₂, 300 µg HCl und 100 µg Trichlorethylen sowie 100 µg Benzol beaufschlagt. Es wurden 93,0 % des HgCl₂, 95,4 % des HCl, 92,2 % des Trichlorethylens und 82,1 % des Benzols sorbiert.

### Beispiel 3

Eine ca. 35 %ige Suspension des Reagens von Beispiel 2 wurde mit Hilfe einer Nutsche auf ein Blaubandfilter aufgebracht. Durch dieses Filter mit der erhaltenen Precoatschicht (Dicke 3 mm) zum Gasstrom wurden 50,3 l synthetisches Abgas mit 150 µg HgCl₂, 100 µg Trichlorethylen und 100 µg Benzol bei 150 ± 5 °C durchgesaugt. Es wurden 94,3 % des HgCl₂, 91,1 % des Trichlorethylens und 79,5 % des Benzols sorbiert.

### Beispiel 4

Die Versuchsdurchführung war wie in Beispiel 1.

Das Reagens bestand aus 85 % CaO + 10 % Bentonit + 0,5 % Al-Pulver, das mit Wasser geschäumt und bis zur Trockne gelöscht und anschließend mit 5 % Ytong-Mehl gemischt worden war.

Die spezifische Oberfläche (BET) betrug 65,1 m²/g. Von einem synthetischen Abgas mit 150 µg HgCl₂, 100 µg Trichlorethylen und 100 µg Benzol (vgl. Beispiel 5) wurden 88,6 % des HgCl₂, 92,3 % des Trichlorethylens und 69,2 % des Benzols sorbiert.

### Beispiel 5

Das Reagens von Beispiel 4 wurde zu einer dickflüssigen Suspension bzw. Paste angerührt, die über einen Frittenboden mit ca. 10 Liter Luft je Gramm Gemisch geschäumt wurde. Dann wurden 5 g Ytong-Mehl homogen eingemischt; anschließend wurde das Produkt zur Abgasreinigung eingesetzt. Das Reagens besaß eine spezifische Oberfläche (BET) von 73,4 m²/g. Von einem synthetischen Abgas mit 150 µg HgCl₂, 100 µg Trichlorethylen und 150 µg Benzol (vgl. Beispiel 5) wurden 88,9 % des HgCl₂, 93,0 % des Trichlorethylens und 66,3 % des Benzols sorbiert.

## Patentansprüche

1. Hochreaktive Reagentien zur Reinigung von Abgasen und Rauchgasen, insbesondere aus Verbrennungsprozessen, sowie von Abwässern mit gleichen oder ähnlichen Schadstoffen wie in Abgasen auf der Basis von Gemischen von Calciumhydroxid mit Zusatzstoffen,
**gekennzeichnet durch**
ein Gemisch
(a) von trockenem gelöschtem Kalk mit porösem gemahlenem Ton als Zusatzstoff
oder
(b) von trockenem porosiertem gelöschtem Kalk mit gemahlenem Ton als Zusatzstoff,
wobei der Gehalt an gelöschtem Kalk etwa 60 bis 99 Masse-% beträgt.

2. Reagentien nach Anspruch 1, dadurch gekennzeichnet, daß sie eine spezifische Oberfläche von etwa 25 bis etwa 200 m²/g aufweisen.

3. Zusammensetzungen zur Reinigung von Abgasen, insbesondere aus Verbrennungsprozessen, auf der Basis von Gemischen von Calciumhydroxid mit Zusatzstoffen, gekennzeichnet durch eine wäßrige Suspension eines oder mehrer Reagentien nach Anspruch 1 oder 2.

4. Reagentien bzw. Zusammensetzungen nach einem der Ansprüche 1 bis 3, dadurch gekennzeichnet, daß sie als Tone Bentonite enthalten.

5. Reagentien bzw. Zusammensetzungen nach einem der Ansprüche 1 bis 4, dadurch gekennzeichnet, daß sie als weitere Zusatzstoffe gebrannten Ton, Gasbetonstaub, Perlite, Blähton, Kalksandsteinmehl, Traßmehl, Yalisteinmehl, Traßkalk, Bleicherde, Zement, Calciumaluminat, Natriumaluminat, Calciumsulfid, organische Sulfide, Calciumsulfit, Calciumsulfat, Herdofenkoks, Braunkohlenstaub, Aktivkohle, Flugasche, Wasserglas, Abbindebeschleuniger und/oder Abbindeverzögerer enthalten.

6. Reagentien bzw. Zusammensetzungen nach einem der Ansprüche 1 bis 5, gekennzeichnet durch einen Gesamtgehalt an Zusatzstoffen von etwa 1 bis 40 Masse-%, bezogen auf die Trockenmasse.

7. Reagentien bzw. Zusammensetzungen nach einem der Ansprüche 1 bis 6, gekennzeichnet durch einen Gesamtgehalt an Zusatzstoffen von etwa 1 bis 15 Masse-%, bezogen auf die Trockenmasse.

8. Reagentien bzw. Zusammensetzungen nach einem der Ansprüche 1 bis 7, gekennzeichnet durch etwa 80 bis 90 Masse-% Kalkhydrat bzw. Calciumhydroxid, etwa 2 bis 20 Masse-% Ton und 0,1 bis 1 Masse-% Calciumsulfid, bezogen auf die Trockenmasse, wobei die Gesamtmasse dieser Bestandteile 100 Masse-% beträgt.

9. Verfahren zur Herstellung von hochreaktiven Reagentien zur Reinigung von Abgasen und Rauchgasen, insbesondere aus Verbrennungsprozessen, sowie von Abwässern mit gleichen oder ähnlichen Schadstoffen wie in Abgasen auf der Basis von Gemischen von Calciumhydroxid mit Zusatzstoffen, insbesondere nach den Ansprüchen 1 bis 8,
gekennzeichnet durch
Mischen
(a) von trockenem gelöschtem Kalk mit porösem gemahlenem Ton als Zusatzstoff
oder
(b) von trockenem porosiertem gelöschtem Kalk mit gemahlenem Ton als Zusatzstoff,
in solchen Mengen, daß das resultierende Produkt etwa 60 bis 99 Masse-% gelöschten Kalk enthält.

10. Verfahren nach Anspruch 9, dadurch gekennzeichnet, daß als Tone Bentonite eingesetzt werden.

11. Verfahren nach Anspruch 9 oder 10, dadurch gekennzeichnet, daß gelöschter Kalk eingesetzt wird, der unter Verwendung eines Porenbildners hergestellt wurde.

12. Verfahren nach einem der Ansprüche 9 bis 11, dadurch gekennzeichnet, daß als weitere Zusatzstoffe gebrannter Ton, Gasbetonstaub, Perlite, Blähton, Kalksandsteinmehl, Traßmehl, Yalisteinmehl, Traßkalk, Bleicherde, Zement, Calciumaluminat, Natriumaluminat, Calciumsulfid, organische Sulfide, Calciumsulfit, Calciumsulfat, kohlenstoffhaltige Sorptionsmittel, wie insbesondere Herdofenkoks, Braunkohlenstaub, Aktivkohle und Flugaschen, Wasserglas, Abbindebeschleuniger und/oder Abbindeverzögerer eingesetzt werden.

13. Verfahren nach einem der Ansprüche 9 bis 12, dadurch gekennzeichnet, daß die Zusatzstoffe in solchen Mengen eingesetzt werden, daß das resultierende Produkt etwa 1 bis 40 Masse-% Zusatzstoffe, bezogen auf die Trockenmasse, enthält.

14. Verfahren nach Anspruch 13, dadurch gekennzeichnet, daß die Zusatzstoffe in solchen Mengen eingesetzt werden, daS das resultierende Produkt etwa 1 bis 15 Masse-% Zusatzstoffe, bezogen auf die Trockenmasse, enthält.

15. Verfahren nach einem der Ansprüche 9 bis 14, dadurch gekennzeichnet, daß Art und Mengen der eingesetzten Zusatzstoffe so gewählt werden, daß das resultierende Produkt etwa 80 bis 90 Masse-% Kalkhydrat bzw. Calciumhydroxid, etwa 2 bis 20 Masse-% Ton und 0,1 bis 1 Masse-% Calciumsulfid, bezogen auf die Trockenmasse, enthält, wobei die Gesamtmasse dieser Bestandteile 100 Masse-% beträgt.

16. Verwendung der Reagentien bzw. Zusammensetzungen nach einem der Ansprüche 1 bis 8 zur Reinigung von Abgasen und Rauchgasen nach Naßverfahren, quasi-trockenen Verfahren und Trockenverfahren.

17. Verwendung der Reagentien bzw. Zusammensetzungen nach einem der Ansprüche 1 bis 8 gemäß Anspruch 16, wobei die Reagentien bzw. Zusammensetzungen in den Reaktoren zur Abgasreinigung und/oder in Form von Precoatschichten auf nachgeschalteten Filtern eingesetzt werden.

18. Verwendung der Reagentien bzw. Zusammensetzungen nach einem der Ansprüche 1 bis 8 gemäß Anspruch 16, wobei diese direkt in den Abgasstrom vor dem Elektrofilter in einen oder vor einem der Reaktoren eingebracht werden, wobei gleichzeitig dasselbe Reagens bzw. dieselbe Zusammensetzung oder ein anderes Reagens bzw. eine andere Zusammensetzung gemäß einem der Ansprüche 1 bis 8 in ein nachgeschaltetes Polizeifilter eingeführt werden.

19. Verwendung der Reagentien bzw. Zusammensetzungen gemäß den Ansprüchen 16 bis 18, wobei ferner die einzelnen Komponenten oder ihre Gemische in nichtporosierter oder porosierter Form auch direkt in den Abgasstrom bzw. die Reaktoren eingebracht werden, ggfs. auch an anderer Stelle als die Reagentien bzw. Zusammensetzungen.

20. Verwendung der Reagentien bzw. Zusammensetzungen gemäß den Ansprüchen 16 bis 19 in beliebigen Reaktoren als Pulver in Flugstromreaktoren oder Wirbelschichtreaktoren, in gekörnter oder kompaktierter Form in Wanderbett-, Festbett- oder Schüttschichtreaktoren sowie in Wirbelschichtreaktoren.

21. Verwendung der Reagentien bzw. Zusammensetzungen nach einem der Ansprüche 1 bis 8 zur Behandlung von Abwässern, die gleiche oder ähnliche Schadstoffe enthalten wie Abgase.

## Claims

1. Highly reactive reagents for purifying waste gases and flue gases, particularly from combustion processes, and for purifying waste water containing the same or similar pollutants to those in waste gases, the reagents being based on mixtures of calcium hydroxide and additives,
characterised by
a mixture
(a) of dry slaked lime with porous ground clay additive
or
(b) dry slaked lime made porous and with ground clay additive,
the content of slaked lime being about 60 to 99% by weight.

2. Reagents according to claim 1, characterised in that they have a specific surface area of about 25 to about 200 m²/g.

3. Compositions for purifying waste gases, particularly from combustion processes, and based on mixtures of calcium hydroxide and additives, characterised by an aqueous suspension of one or more reagents according to claim 1 or 2.

4. Reagents or compositions according to any of claims 1 to 3, characterised in that the clays therein are bentonites.

5. Reagents or compositions according to any of claims 1 to 4, characterised in that they contain the following additional additives: fire clay, aerated cement dust, pearlite, expanded clay, lime sandstone dust, trass dust, Yali rock dust, trass lime, fuller's earth, cement, calcium aluminate, sodium aluminate, calcium sulphide, organic sulphides, calcium sulphite, calcium sulphate, open-hearth coke, lignite dust, activated carbon, fly ash, water-glass, setting accelerators and/or retarders.

6. Reagents or compositions according to any of claims 1 to 5, characterised by a total content of additives of about 1 to 40 wt.% relative to dry weight.

7. Reagents or compositions according to any of claims 1 to 6, characterised by a total content of additives of about 1 to 15 wt.% relative to dry weight.

8. Reagents or compositions according to any of claims 1 to 7, characterised by about 80 to 90 wt.% slaked lime or calcium hydroxide, about 2 to 20 wt.% clay and 0.1 to 1 wt.% calcium sulphide relative to dry weight, the total weight of these constituents making up 100% by weight.

9. A method of manufacturing highly reactive reagents for purifying waste gases and flue gases, particularly from combustion processes, and for purifying waste water containing the same or similar pollutants to those in waste gases, the reagents being based on mixtures of calcium hydroxide and additives, more particularly according to claims 1 to 8,
characterised by
mixing
(a) dry slaked lime with porous ground clay additive
or
(b) dry slaked lime made porous and with ground clay additive,
in proportions such that the resulting product contains about 60 to 99% slaked lime by weight.

10. A method according to claim 9, characterised in that the clays used are bentonites.

11. A method according to claim 9 or 10, characterised by use of slaked lime produced by using a pore-forming agent.

12. A method according to any of claims 9 to 11, characterised in that the additional additives are fire clay, aerated concrete dust, pearlite, expanded clay, lime sandstone dust, trass dust, Yali rock dust, trass lime, fuller's earth, cement, calcium aluminate, sodium aluminate, calcium sulphide, organic sulphides, calcium sulphite, calcium sulphate, carbon-containing sorption agents, such as more particularly open-hearth coke, lignite dust, activated carbon and fly ash, water-glass, setting accelerators and/or retarders.

13. A method according to any of claims 9 to 12, characterised in that the additives are used in proportions such that the resulting product contains about 1 to 40% by weight of additives relative to dry weight.

14. A method according to claim 13, characterised in that the additives are used in proportions such that the resulting product contains about 1 to 15% additives by weight relative to dry weight.

15. A method according to any of claims 9 to 14, characterised in that the nature and proportions of the additives are so chosen that the resulting product contains about 80 to 90 wt.% slaked lime or calcium hydroxide, about 2 to 20 wt.% clay and 0.1 to 1 wt.% calcium sulphide relative to dry weight, the total weight of these constituents being 100 wt.%.

16. Use of the reagents or compositions according to any of claims 1 to 8 for purifying waste gases and flue gases by wet methods, quasi-dry methods and dry methods.

17. Use of the reagents or compositions according to any of claims 1 to 8 as per claim 16, the reagents or compositions being used in the reactors for purifying waste gas and/or in the form of precoat layers on downstream filters.

18. Use of the reagents or compositions according to any of claims 1 to 8 as per claim 16, the reagents being directly introduced into the stream of waste gas upstream of the electrostatic filter in or in front of one of the reactors, the same reagent or the same composition or a different reagent or a different composition according to any of claims 1 to 8 simultaneously being introduced into a downstream police filter.

19. Use of the reagents or compositions according to claims 16 to 18, wherein also the individual components or mixtures thereof in non-porous or porous form are also directly introduced into the waste-gas flow or the reactors, optionally in a different place from the reagents or compositions.

20. Use of the reagents or compositions according to claims 16 to 19 in any reactors as powder in entrained-flow reactors or fluidised-bed reactors, in granulated or compacted form in moving-bed, fixed-bed or packed-bed reactors, or in fluidised-bed reactors.

21. Use of the reagents or compositions according to any of claims 1 to 8 for treatment of waste water containing the same or similar pollutants to those in waste gases.

## Revendications

1. Réactifs à réactivité élevée pour purifier des gaz d'échappement et des gaz de fumées, en particulier issus de processus de combustion, ainsi que d'eaux usées contenant des polluants identiques ou analogues à ceux présents dans des gaz d'échappement, à base de mélanges d'hydroxyde de calcium et d'additifs,
caractérisés par
un mélange
(a) de chaux éteinte sèche avec de l'argile broyée poreuse comme additif
ou
(b) de chaux éteinte sèche rendue poreuse avec de l'argile broyée comme additif,
la teneur en chaux éteinte s'élevant à une valeur d'environ 60 à 99% en masse.

2. Réactifs selon la revendication 1, caractérisés en ce qu'ils présentent une surface spécifique d'environ 25 à environ 200 m²/g.

3. Compositions pour la purification de gaz d'échappement, en particulier issus de processus de combustion, à base de mélanges d'hydroxyde de calcium avec des additifs, caractérisées par une suspension aqueuse d'un ou de plusieurs des réactifs selon la revendication 1 ou 2

4. Réactifs, respectivement compositions selon l'une quelconque des revendications 1 à 3, caractérisés en ce qu'ils contiennent, comme argiles, des bentonites.

5. Réactifs, respectivement compositions selon l'une quelconque des revendications 1 à 4, caractérisés en ce qu'ils contiennent, comme additifs supplémentaires, de l'argile brûlée, de la poussière de béton-gaz, de la perlite, de l'argile expansée, de la poudre de pierre à chaux, de la poudre de trass, de la poudre de pierre Yali, de la chaux de trass, de l'argile décolorante, du ciment, de l'aluminate de calcium, de l'aluminate de sodium, du sulfure de calcium, des sulfures organiques, du sulfite de calcium, du sulfate de calcium, du coke de four à sole, de la poussière de lignite, du charbon actif, des cendres volantes, du silicate de sodium, des accélérateurs de la prise et/ou des retardateurs de la prise.

6. Réactifs, respectivement compositions selon l'une quelconque des revendications 1 à 5, caractérisés par une teneur totale en additifs d'environ 1 à 40% en masse, rapportée à la matière sèche.

7. Réactifs, respectivement compositions selon l'une quelconque des revendications 1 à 6, caractérisés par une teneur totale en additifs d'environ 1 à 15% en masse, rapportée à la matière sèche.

8. Réactifs, respectivement compositions selon l'une quelconque des revendications 1 à 7, caractérisés par d'environ 80 à 90% en masse de chaux hydratée, respectivement d'hydroxyde de calcium, d'environ 2 à 20% en masse d'argile et de 0,1 à 1% en masse de sulfure de calcium, rapportés à la matière sèche, la masse totale de ces composants représentant 100% en masse.

9. Procédé pour la préparation de réactifs à réactivité élevée pour la purification de gaz d'échappement et de gaz de fumées, en particulier issus de processus de combustion, ainsi que d'eaux usées contenant des polluants identiques ou analogues à ceux présents dans les gaz d'échappement, à base de mélanges d'hydroxyde de calcium avec des additifs en particulier selon les revendications 1 à 8,
caractérisé par
le fait de mélanger
(a) de la chaux éteinte sèche avec de l'argile broyée poreuse comme additif
ou
(b) de la chaux éteinte sèche rendue poreuse avec de l'argile broyée comme additif,
dans des quantités telles que le produit résultant contient d'environ 60 à 99% en masse de chaux éteinte.

10. Procédé selon la revendication 9, caractérisé en ce que, comme argiles, on met en oeuvre des bentonites.

11. Procédé selon la revendication 9 ou 10, caractérisé en ce qu'on met en oeuvre de la chaux éteinte que l'on a préparée en utilisant un formateur de pores.

12. Procédé selon les revendications 9 à 11, caractérisé en ce que, comme autres additifs, on met en oeuvre de l'argile calcinée, de la poussière de béton-gaz, de la perlite, de l'argile expansée, de la poudre de pierre à chaux, de la poudre de trass, de la poudre de pierre Yali, de la chaux de trass, de l'argile décolorante, du ciment, de l'aluminate de calcium, de l'aluminate de sodium, du sulfure de calcium, des sulfures organiques, du sulfite de calcium, du sulfate de calcium, des agents de sorption contenant du carbone, tels qu'en particulier du coke de four à sole, de la poussière de lignite, du charbon actif et des cendres volantes, du silicate de sodium, des accélérateurs de la prise et/ou des retardateurs de la prise.

13. Procédé selon les revendications 9 à 12, caractérisé en ce qu'on met en oeuvre les additifs dans des quantités telles que le produit résultant contient d'environ 1 à 40% en masse d'additifs, rapportées à la matière sèche.

14. Procédé selon la revendication 13, caractérisé en ce qu'on met en oeuvre les additifs dans des quantités telles que le produit résultant contient d'environ 1 à 15% en masse d'additifs, rapportées à la matière sèche.

15. Procédé selon les revendications 9 à 14, caractérisé en ce qu'on sélectionne le type et les quantités des additifs mis en oeuvre de telle sorte que le produit résultant contient d'environ 80 à 90% en masse de chaux hydratée, respectivement d'hydroxyde de calcium, d'environ 2 à 20% en masse d'argile et de 0,1 à 1% en masse de sulfure de calcium, rapportées à la matière sèche, la masse totale de ces composants s'élevant à 100% en masse.

16. Utilisation des réactifs, respectivement des compositions selon l'une quelconque des revendications 1 à 8 pour purifier des gaz d'échappement et des gaz de fumées conformément à des procédés par voie humide, à des procédés mis en oeuvre dans des conditions quasi sèches et à des procédés à sec.

17. Utilisation des réactifs, respectivement des compositions selon l'une quelconque des revendications 1 à 8, selon la revendication 16, dans laquelle on met en oeuvre les réactifs, respectivement, les compositions dans les réacteurs pour la purification de gaz d'échappement et/ou sous forme de couches de fond sur des filtres montés à la suite.

18. Utilisation des réactifs, respectivement des compositions selon l'une quelconque des revendications 1 à 8, selon la revendication 16, caractérisée en ce qu'on monte directement ces derniers dans le courant de gaz d'échappement avant le filtre électronique dans un ou devant un des réacteurs, en introduisant simultanément le même réactif, respectivement la même composition, ou encore un autre réactif, respectivement une autre composition selon l'une quelconque des revendications 1 à 8 dans un filtre de sureté terminal monté à la suite.

19. Utilisation des réactifs, respectivement des compositions, selon les revendications 16 à 18, dans laquelle on monte les composants individuels ou leurs mélanges sous une forme non rendue poreuse ou rendue poreuse également directement dans le courant de gaz d'échappement, respectivement dans les réacteurs, éventuellement également à un autre endroit que celui occupé par les réactifs, respectivement les compositions.

20. Utilisation des réactifs, respectivement des compositions, selon les revendications 16 à 19, dans n'importe quels réacteurs, comme poudres dans des réacteurs à flux entraîné ou dans des réacteurs à lit fluidisé, sous forme granulée ou rendue compacte dans des réacteurs à lit mobile, à lit fixe ou à lit tassé, ainsi que dans des réacteurs à lit fluidisé.

21. Utilisation des réactifs, respectivement des compositions selon l'une quelconque des revendications 1 à 8, pour le traitement d'eaux usées qui contiennent des polluants identiques ou analogues à ceux contenus dans des gaz d'échappement.
